# EUROPÄISCHE PATENTSCHRIFT

(11) **EP 3 616 992 B1**
(45) Veröffentlichungstag und Bekanntmachung des Hinweises auf die Patenterteilung: **10.03.2021**
(21) Anmeldenummer: 18191005.0
(22) Anmeldetag: 27.08.2018
(51) Int. Cl.: B60Q 1/068

(54) **EINSTELLVORRICHTUNG FÜR EINEN KRAFTFAHRZEUGSCHEINWERFER**
ADJUSTING DEVICE FOR A MOTOR VEHICLE HEADLIGHT
DISPOSITIF DE RÉGLAGE POUR UN PHARE DE VÉHICULE AUTOMOBILE

(43) Veröffentlichungstag der Anmeldung: 04.03.2020
(73) Patentinhaber: ZKW Group GmbH, 3250 Wieselburg (AT)
(72) Erfinder: Seel, Reinhard, 3200 Ober-Grafendorf (AT); Bauer, Günter, 3372 Blindenmarkt (AT)
(74) Vertreter: Patentanwaltskanzlei Matschnig & Forsthuber OG

(56) Entgegenhaltungen:
- EP-A1- 2 881 283
- CN-A- 104 296 093
- DE-A1-102011 017 538
- DE-A1-102014 200 237
- DE-U1-202015 106 575
- FR-A1- 3 022 984

## Beschreibung

Die Erfindung betrifft eine Einstellvorrichtung zur Einstellung zweier optisch relevanter Baueinheiten eines Kraftfahrzeugscheinwerfers.

Die Erfindung betrifft ebenso einen Kraftfahrzeugscheinwerfer mit zumindest einer erfindungsgemäßen Einstellvorrichtung.

Zur gesetzeskonformen Einstellung des mit einem Scheinwerfer erzeugten Lichtbildes ist es notwendig, dass ein oder mehrere optisch relevante Baueinheiten des Scheinwerfers unter anderem in Höhenrichtung und/oder seitlich einstellbar sind. Bei einer solchen relevanten optischen Baueinheit handelt es sich beispielsweise um ein Lichtmodul, etwa bestehend aus zumindest einer Lichtquelle, zumindest einem Reflektor, zumindest einer Linse etc.; es kann sich aber auch um einzelne Bauteile wie Reflektoren, Linsen etc. handeln, die entsprechend verstellt werden.

Dabei ist die zumindest eine optisch relevante Baueinheit häufig um eine oder mehrere Achsen, beispielsweise um eine horizontale und/oder vertikale Achse verschwenkbar in dem Scheinwerfer gelagert. Beispielsweise sind eine oder mehrere Lichtmodule an einem Tragerahmen gelagert, und der Tragerahmen ist um eine oder zwei Achsen, wie vorstehend beschrieben, verschwenkbar gelagert.

Einstellvorrichtungen zur Einstellung von optisch relevanten Baueinheiten von Kraftfahrzeugscheinwerfern, wie beispielsweise Lichtquellen, Reflektoren und/oder Linsen, erlauben eine Anpassung des durch den Scheinwerfer erzeugten Lichtbildes an vorgegebene Anforderungen. Dies erlaubt es, Abweichungen von Sollvorgaben, die beispielsweise nach einem Einbauvorgang des Scheinwerfers in ein Kraftfahrzeug festgestellt werden, nachträglich durch Verwendung einer Einstellvorrichtung ausgeglichen werden können.

Eine typische Aufgabe von Einstellvorrichtungen liegt in der Anpassung der Leuchtweite eines Scheinwerfers, wobei dieses technische Gebiet insbesondere unter dem Ausdruck "Leuchtweitenregulierung" - kurz LWR genannt - bekannt geworden ist.

Zur Verstellung ist in der Regel zumindest eine Antriebsvorrichtung vorgesehen, wobei die Antriebsvorrichtung üblicherweise manuell betätigbar ist, beispielsweise umfasst die Antriebsvorrichtung ein Drehrad bzw. eine Einstellschraube, deren Drehbewegung über eine geeignete Mechanik in eine Linearbewegung eines Gleitelements umgesetzt wird, welches in entsprechenden Gleitbahnen in dem Scheinwerfergehäuse verschiebbar geführt ist. Ein Verstellpunkt der optisch relevanten Baueinheit, z.B. des Tragerahmens, an welchem die Baueinheit angebracht ist, ist in dem Gleitelement gelagert, sodass bei einem Verschieben des Gleitelements die Baueinheit bzw. der Tragerahmen verschwenkt werden.

Eine Einstellvorrichtung zur Einstellung zweier optisch relevanter Baueinheiten ist z.B. aus DE 20 2015 106575 U1, DE 10 2011 017538 A1 oder EP 2 881 283 A1 bekannt.

Es ist eine Aufgabe der Erfindung eine verbesserte Einstellvorrichtung zur Einstellung zweier optisch relevanter Baueinheiten eines Kraftfahrzeugscheinwerfers bereitzustellen.

Diese Aufgabe wird dadurch gelöst, dass die Einstellvorrichtung mit den Merkmalen des beiliegenden Anspruchs 1 ausgebildet ist.

Die das Ubertragungselement mit dem Stellelement verbindende Verbindung ist eingerichtet, eine Drehbewegung des Übertragungselements in eine Schiebebewegung des Stellelements entlang der Verschubachse relativ zu dem Übertragungselement zu wandeln.

Das Stellelement greift dergestalt an zwei optisch relevanten Baueinheiten an, dass eine Bewegung des Stellelements in eine geänderte Ausrichtung der optisch relevanten Baueinheiten gewandelt werden kann. Bei den optisch relevanten Baueinheiten kann es sich beispielsweise um Blenden(anordnungen), Lichtquellen, Reflektoren, Linsen, ganze Lichtmodule bzw. Baugruppen, etc. handeln. Ebenso ist es möglich, dass zumindest eine oder beider optisch relevanten Baueinheiten in einer Verstellmechanik, beispielsweise in einem schwenkbar gelagerten Tragerahmen, aufgenommen sind. Unter dem Ausdruck "dass das Stellelement dazu eingerichtet, an den optisch relevanten Baueinheiten anzugreifen" wird daher auch eine Anordnung verstanden, in der das Stellelement indirekt, beispielsweise über eine Verstellmechanik) an der optisch relevanten Baueinheit angreift.

Das Halteelement ist als von den restlichen Bauteilen der Einstellvorrichtung getrennt ausgebildet und ist in Bezug auf die Antriebsvorrichtung fixiert, beispielsweise an einem Kraftfahrzeugscheinwerfergehäuse.

Weiters wird die Feinjustierung der Bewegung des Stellelements entlang der Verschubachse durch die Gewindesteigung des Gewindeabschnitts des Stellelements und des dazu korrespondierenden Gegengewindes der Führungsteils, d.h. dass für jede bestimmte Gewindesteigung eines Stellelements ein eigenes Führungsteil vorgesehen sein kann.

Mit Vorteil kann vorgesehen sein, dass das Stellelement zumindest einen radial zur Verschubachse vorragenden Vorsprung und das Halteelement einen ersten und einen zweiten dazu korrespondierenden Anschlag aufweist, wobei der zumindest eine Vorsprung sowie der erste und der zweite Anschlag dazu eingerichtet sind, den Hub des Stellelements entlang der Verschubachse zu begrenzen.

Der Maximal- sowie der Minimalhub des Stellelements entlang der Verschubachse in Bezug auf das Übertragungselement wird durch den zumindest einen am Stellelement angeordneten Vorsprung und den zwei dazu korrespondierenden, an dem Halteelement angeordneten Anschlägen begrenzt.

Für gewünschte Änderungen der auszuführenden Hublänge des Stellelements braucht dementsprechend lediglich das Halteelement ausgetauscht werden bei sonst gleichbleibenden Komponenten der Einstellvorrichtung.

Es kann vorgesehen sein, dass das Führungsteil lösbar an dem Halteelement angeordnet ist. Dies bringt den Vorteil, dass die Einstellvorrichtung variabel bleibt im Hinblick auf die oben beschriebene Feinjustierung, d.h. dass unterschiedliche Stellelemente und dazu korrespondierende Führungsteile mit dem Halteelement kombinierbar sind.

Mit anderen Worten ist die Übersetzung der Drehbewegung der Antriebsvorrichtung über die Gewindesteigung des Stellelements und dem dazu korrespondierenden Führungsteil bestimmt, und diese Übersetzung kann, wie oben beschrieben, durch ein einfaches Austauschen des Stellelements und der Führungsteils variabel verändert werden, ohne dass andere Komponenten der Einstellvorrichtung verändert werden müssen.

Erfindungsgemäß ist das Stellelement als Stellstange mit entgegengesetzten Enden ausgebildet, wobei das erste und das zweite Kopplungselement jeweils an einem Ende des Stellelements angeordnet sind.

Die Stellstange ist als längliche Stellstange ausgeführt, wobei das erste Kopplungselement an einem Ende der Stellstange und das zweite Kopplungselement an dem anderen Ende der Stellstange angeordnet ist. Der Abstand der Kopplungselemente ergibt sich dadurch aus der Länge der Stellstange bzw. dem Abstand der Enden, welche sich entgegengesetzt auf der Längsachse der Stellstange befinden.

Vorteilhafterweise kann das erste und/oder das zweite Kopplungselement durch einen konzentrisch zur Verschubachse angeordneten Kugelkopf gebildet ist.

Hierzu kann weiters ein Verbindungsteil jeweils zwischen einem Kopplungselement des Stellelements und einer einzustellenden, optisch relevanten Baueinheit vorgesehen sein, wobei das Verbindungsteil als von der optischen Baueinheit getrennt ausgebildet sein kann. Durch die Erfindung ist es möglich, eine besonders robuste und fein justierbare Einstellvorrichtung zu erhalten, die kostengünstig realisierbar ist.

Erfindungsgemäß ist/sind das erste und/oder das zweite Kopplungselement als auf das Stellelement schraubbare Schrauben ausgebildet, um den Relativabstand des ersten und zweiten Kopplungselements zueinander einstellen zu können.

Die Antriebsvorrichtung umfasst eine Einstellschraube, deren Drehbewegung in bekannter Weise in eine Drehbewegung des Übertragungselements umgesetzt wird, wobei zur Einstellung des Relativabstands des ersten und zweiten Kopplungselements diese Einstellschraube fixiert werden kann, wodurch das erste und/oder das zweite Kopplungselement mit Hilfe eines Schraubers bewegt werden kann.

Es kann günstig sein, wenn das erste und/oder das zweite Kopplungselement als von dem Stellelement lösbare Schrauben ausgebildet sind.

Es kann vorgesehen sein, dass das Übertragungselement eine Verzahnung, insbesondere ein Tellerrad aufweist.

Dabei kann es günstig sein, wenn eine Einstellschraube zum Eingriff in die Verzahnung vorgesehen ist.

Die Aufgabe wird ebenso durch einen Kraftfahrzeugscheinwerfer, welcher ein Gehäuse, zumindest zwei optisch relevanten Baueinheiten und zumindest eine erfindungsgemäße Einstellvorrichtung umfasst, gelöst.

Hierbei kann vorgesehen sein, dass das Führungsteil in Bezug auf das Gehäuse des Kraftfahrzeugscheinwerfers feststehend angeordnet ist.

Ebenso kann vorgesehen sein, dass das Halteelement mit dem Gehäuse des Kraftfahrzeugscheinwerfers fest verbunden ist.

Nachfolgend wird die Erfindung anhand von beispielhaften Zeichnungen näher erläutert. Hierbei zeigt
Fig. 1 ein Beispiel einer Einstellvorrichtung in einer Seitenansicht,
Fig. 2 das Beispiel von Fig. 1 in einer Ansicht von oben,
Fig. 3 ein weiteres Beispiel einer Einstellvorrichtung in einer perspektivischen Ansicht, und
Fig. 4 das Beispiel aus Fig. 3 einer weiteren perspektivischen Ansicht.

Grundsätzlich kann es sich bei den optisch relevanten Baueinheiten um Einzelteile eines Kraftfahrzeugscheinwerfers oder einer Leuchteinheit, etwa um einen Reflektor, eine Linse, eine Lichtquelle, eine Blendenanordnung etc. handeln, oder die optisch relevanten Baueinheiten umfassen ein oder mehrere solcher Bauteile oder ein oder mehrere Leuchteinheiten auf einem gemeinsamen Träger, der verschwenkbar ist.

Im Folgenden wird der Einfachheit halber von einem Lichtmodul als optisch relevante Baueinheit ausgegangen.

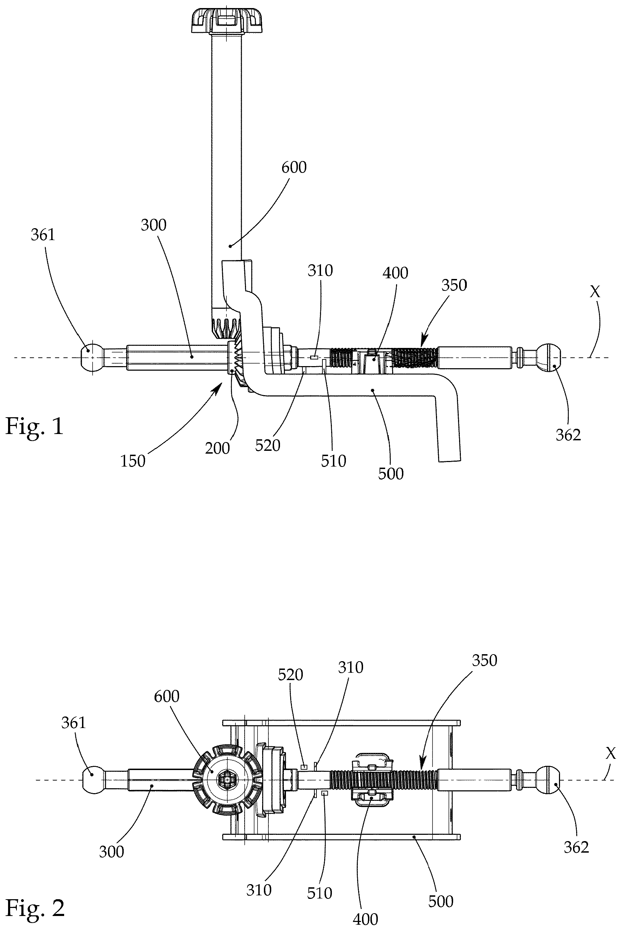

Wie unter anderem **Fig. 1** entnommen werden kann, umfasst die Einstellvorrichtung eine Antriebsvorrichtung **150** mit einem auf einem Halteelement **500,** um eine Verschubachse **X** drehbar gelagerten Übertragungselement **200,** ein mit dem Übertragungselement **200** mittels einer Verbindung in mechanischem Eingriff stehendes Stellelement **300,** wobei das Stellelement **300** einen Gewindeabschnitt **350** aufweist und ferner dazu eingerichtet ist, an den optisch relevanten Baueinheiten mittels einem ersten und einem zweiten Kopplungselement **361, 362** an diesen anzugreifen, und ein an dem Halteelement **500** anbringbares Führungsteil **400** mit einem den Gewindeabschnitt **350** korrespondierenden Gegengewinde, wobei das Stellelement **300** mittels des auf den Gewindeabschnitt **350** anbringbaren Führungsteils **400,** welches in Kombination mit dem Gewindeabschnitt **350** dazu eingerichtet ist, eine Drehbewegung des Übertragungselements **200** in eine Schiebebewegung entlang der Verschubachse X zu wandeln, in dem Führungsteil **400** dreh- und verschiebbar gelagert ist.

Das erste und das zweite Kopplungselement **361, 362** ist in den gezeigten Beispielen durch einen konzentrisch zur Verschubachse **X** angeordneten Kugelkopf ausgebildet, wobei das erste als auch das zweite Kopplungselement **361, 362** als von dem Stellelement **300** lösbare Schrauben ausgebildet sein kann.

Die Antriebsvorrichtung **150,** welche vorzugsweise an einem Scheinwerfergehäuse gelagert sein kann, ist beispielsweise manuell betätigbar und umfasst in dem in den Figuren gezeigten Ausführungsbeispielen eine Einstellschraube **600,** deren Drehbewegung in bekannter Weise in eine Drehbewegung eines Übertragungselements **200** umgesetzt wird, das um eine Verschubachse X drehbar gelagert ist.

Die Drehachse der Einstellschraube **600** ist so zur Verschubachse **X** orientiert, dass die Einstellschraube **600** eines Kraftfahrzeugscheinwerfers, der in einem Fahrzeug verbaut ist, weiterhin zugänglich ist. Generell kann die Drehachse der Einstellschraube **600** einen beliebigen Winkel in Bezug auf die Verschubachse X aufweisen. Erfahrungsgemäß ist es allerdings vorteilhaft, wenn die Drehachse der Einstellschraube **600** einen Winkel zwischen 80° und 100° in Bezug auf die Verschubachse **X** einnimmt. In einer besonders bevorzugten Ausführungsform ist die Drehachse der Einstellschraube **600** normal zur Verschubachse **X** orientiert.

Das Übertragungselement **200** weist überdies eine Verzahnung auf, insbesondere ein Tellerrad, wobei die Einstellschraube **600** zum Eingriff in die Verzahnung vorgesehen ist.

Das Übertragungselement **200** weist zudem eine Öffnung auf, in welche das Stellelement **300** eingeschoben ist. Durch die Querschnittsausgestaltung der Öffnung des Übertragungselements **200,** vorzugsweise eine Sechskantöffnung, und des entsprechend dazu korrespondierenden Abschnitts des Stellelements **300** kann das Stellelement **300** um eine Verschubachse **X** gedreht werden, d.h. dass bei einer Drehbewegung des Übertragungselements **200** das Stellelement **300** ebenfalls mit verdreht wird.

Weiters ist die Stellstange **300** in **Fig. 1** sowie in den weiteren Figuren als Stellstange ausgebildet und weist einen Gewindeabschnitt **350** auf, mittels welchem das Stellelement **300** mit einem ein zum Gewindeabschnitt **350** des Stellelements **300** korrespondierenden Gegengewinde aufweisendes Führungsteil **400** um seine Längsachse bzw. der Verschubachse **X** drehbar gelagert ist, wobei das Führungsteils **400** in Bezug auf die Antriebsvorrichtung **150** feststehend auf dem Halteelement **500** angeordnet ist.

Das Führungsteil **400** ist in dem in den Figuren gezeigten Ausführungsbeispielen lösbar bzw. austauschbar an dem Halteelement **500** befestigt.

Das Halteelement **500** ist beispielsweise mit einem Kraftfahrzeugscheinwerfergehäuse fest verbunden und beispielsweise mittels Schrauben angeschraubt.

Zudem weist das Halteelement **500** in dem Beispiel aus **Fig. 1** und **2** einen ersten und einen zweiten Anschlag **510, 520** auf, die in Verbindung mit zwei an dem Stellelement **300** angeordneten, radial zur Verschubachse **X** vorragenden Vorsprüngen **310** die Schubbewegung des Stellelements **300** entlang der Verschubachse **X** begrenzen.

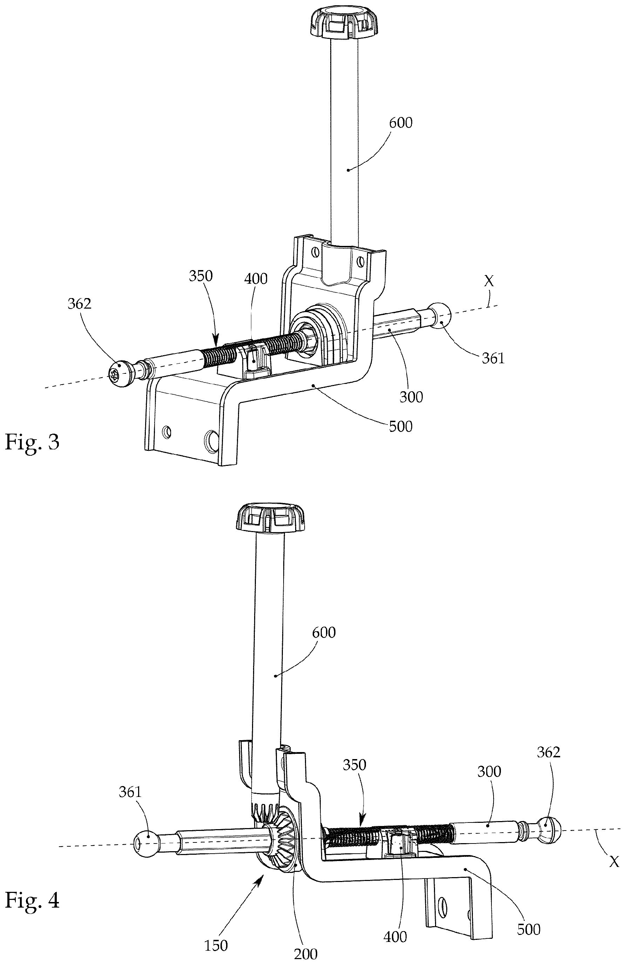

**Fig. 3** und **4** zeigen ein weiteres Beispiel einer Einstellvorrichtung, jedoch ohne die zuvor erwähnten Anschläge **510, 520** und Vorsprüngen **310** des Beispiels aus **Fig. 1** und **2****.**

## Patentansprüche

1. Einstellvorrichtung zur Einstellung zweier optisch relevanter Baueinheiten eines Kraftfahrzeugscheinwerfers, welche Einstellvorrichtung Folgendes umfasst:
- eine Antriebsvorrichtung (150) mit einem auf einem Halteelement (500), um eine Verschubachse (X) drehbar gelagerten Übertragungselement (200),
- ein mit dem Übertragungselement (200) mittels einer Verbindung in mechanischem Eingriff stehendes Stellelement (300), wobei das Stellelement (300) einen Gewindeabschnitt (350) aufweist und ferner dazu eingerichtet ist, an den optisch relevanten Baueinheiten mittels einem ersten und einem zweiten Kopplungselement (361, 362), welche zueinander einen Abstand aufweisen, an diesen anzugreifen, wobei das Stellelement (300) als Stellstange mit entgegengesetzten Enden ausgebildet ist, und wobei das erste und das zweite Kopplungselemeni (361, 362) jeweils an einem Ende des Stellelements (300) angeordnet sind,
- ein an dem Halteelement (500) angeordnetes Führungsteil (400) mit einem den Gewindeabschnitt (350) korrespondierenden Gegengewinde, wobei das Stellelement (300) mittels des auf den Gewindeabschnitt (350) anbringbaren Führungsteils (400), welches in Kombination mit dem Gewindeabschnitt (350) dazu eingerichtet ist, eine Drehbewegung des Übertragungselements (200) in eine Schiebebewegung entlang der Verschubachse (X) zu wandeln, in dem Führungsteil (400) dreh- und verschiebbar gelagert ist,
wobei die Antriebsvorrichtung (150) eine Einstellschraube (600) zur Umsetzung einer Drehbewegung des Übertragungselements (200) umfasst, und wobei die Einstellschraube (660) zur Einstellung des Relativabstands des ersten und zweiten Kopplungselements fixierbar ist, wobei das erste und/oder das zweite Kopplungselement (361, 362) als auf das Stellelement (300) schraubbare Schrauben ausgebildet ist / sind, um den Abstand des ersten und zweiten Kopplungselements zueinander einstellen zu können.

2. Vorrichtung nach Anspruch 1, **dadurch gekennzeichnet, dass** das Stellelement (300) zumindest einen radial zur Verschubachse (X) vorragenden Vorsprung (310) und das Halteelement (500) einen ersten und einen zweiten dazu korrespondierenden Anschlag (510, 520) aufweist, wobei der zumindest eine Vorsprung (310) sowie der erste und der zweite Anschlag (510, 520) dazu eingerichtet sind, den Hub des Stellelements (300) entlang der Verschubachse (X) zu begrenzen.

3. Vorrichtung nach Anspruch 1 oder 2, **dadurch gekennzeichnet, dass** das Führungsteil (400) lösbar an dem Halteelement (500) angeordnet ist.

4. Vorrichtung nach einem der Ansprüche 1 bis 3, **dadurch gekennzeichnet, dass** das erste und/oder das zweite Kopplungselement (361, 362) durch einen konzentrisch zur Verschubachse (X) angeordneten Kugelkopf gebildet ist / sind.

5. Vorrichtung nach einem der Ansprüche 1 bis 4, **dadurch gekennzeichnet, dass** das erste und/oder das zweite Kopplungselement (361, 362) als von dem Stellelement (300) lösbare Schrauben ausgebildet ist/sind.

6. Vorrichtung nach einem der Ansprüche 1 bis 5, **dadurch gekennzeichnet, dass** das Übertragungselement (200) eine Verzahnung, insbesondere ein Tellerrad aufweist.

7. Vorrichtung nach Anspruch 6, **dadurch gekennzeichnet, dass** eine Einstellschraube zum Eingriff in die Verzahnung vorgesehen ist.

8. Kraftfahrzeugscheinwerfer, umfassend ein Gehäuse, zumindest zwei optisch relevante Baueinheiten und zumindest eine Einstellvorrichtung gemäß einem der Ansprüche 1 bis 7.

9. Kraftfahrzeugscheinwerfer nach Anspruch 8, **dadurch gekennzeichnet, dass** das Führungsteil (400) in Bezug auf das Gehäuse des Kraftfahrzeugscheinwerfers feststehend angeordnet ist.

10. Kraftfahrzeugscheinwerfer nach Anspruch 8 oder 9, **dadurch gekennzeichnet, dass** das Halteelement (500) mit dem Gehäuse des Kraftfahrzeugscheinwerfers fest verbunden ist.

## Claims

1. Adjusting device for adjusting two optically relevant units of a motor vehicle headlamp, which adjusting device comprises the following:
- a drive device (150) with a transmission element (200) mounted on a holding element (500) so as to be rotatable about a displacement axis (X),
- an adjusting element (300) in mechanical engagement with the transmission element (200) by means of a connection, the adjusting element (300) having a threaded portion (350) and being further adapted to engage the optically relevant structural units by means of a first and a second coupling element (361, 362) which are spaced apart from one another, wherein the adjusting element (300) is designed as an adjusting rod having opposite ends, and wherein the first and the second coupling element (361, 362) are each arranged at one end of the adjusting element (300)
- a guide part (400) arranged on the retaining element (500) and having a mating thread corresponding to the threaded portion (350), wherein the actuating element (300) is rotatably and displaceably mounted in the guide part (400) by means of the guide part (400) which can be fitted to the threaded portion (350) and which, in combination with the threaded portion (350), is arranged to convert a rotary movement of the transmission element (200) into a displacement movement along the displacement axis (X),
wherein the drive device (150) comprises an adjusting screw (600) for converting a rotational movement of the transmission element (200), and wherein the adjusting screw (660) is fixable for adjusting the relative distance of the first and second coupling elements, wherein
the first and/or the second coupling element (361, 362) is/are designed as screws that can be screwed onto the adjusting element (300) in order to be able to adjust the distance of the first and second coupling element from one another.

2. Device according to claim 1, **characterized in that** the actuating element (300) has at least one projection (310) projecting radially with respect to the displacement axis (X) and the holding element (500) has a first and a second stop (510, 520) corresponding thereto, the at least one projection (310) and the first and the second stop (510, 520) being set up to limit the stroke of the actuating element (300) along the displacement axis (X).

3. Device according to claim 1 or 2, **characterized in that** the guide part (400) is detachably arranged on the holding element (500).

4. Device according to one of claims 1 to 3, **characterized in that** the first and/or the second coupling element (361, 362) is/are formed by a spherical head arranged concentrically to the displacement axis (X).

5. Device according to one of the claims 1 to 4, **characterized in that** the first and/or the second coupling element (361, 362) is/are formed as screws which can be detached from the actuating element (300).

6. Device according to one of claims 1 to 5, **characterized in that** the transmission element (200) has a toothing, in particular a ring gear.

7. Device according to claim 6, **characterized in that** an adjusting screw is provided for engagement in the toothing.

8. Motor vehicle headlamp, comprising a housing, at least two optically relevant structural units and at least one adjusting device according to any one of claims 1 to 7.

9. Motor vehicle headlamp according to claim 8, **characterized in that** the guide member (400) is arranged fixed with respect to the housing of the motor vehicle headlamp.

10. Motor vehicle headlamp according to claim 8 or 9, **characterized in that** the retaining element (500) is fixedly connected to the housing of the motor vehicle headlamp.

## Revendications

1. Dispositif de réglage pour le réglage de deux unités optiquement pertinentes d'un projecteur de véhicule automobile, lequel dispositif de réglage comprend :
- un dispositif d'entraînement (150) comprenant un élément de transmission (200) monté sur un élément de support (500) de manière à pouvoir tourner autour d'un axe de déplacement (X),
- un élément de réglage (300) en engagement mécanique avec l'élément de transmission (200) au moyen d'une connexion, l'élément de réglage (300) ayant une partie filetée (350) et étant en outre adapté pour engager les unités structurelles optiquement pertinentes au moyen d'un premier et d'un second élément de couplage (361, 362) qui sont espacés l'un de l'autre, dans lequel l'élément de réglage (300) est sous la forme d'une tige de réglage ayant des extrémités opposées, et dans lequel le premier et le second élément de couplage (361, 362) sont chacun disposés à une extrémité de l'élément de réglage (300)
- une pièce de guidage (400) disposée sur l'élément de retenue (500) et présentant un contre-filetage correspondant à la partie filetée (350), l'élément d'actionnement (300) étant monté de manière à pouvoir tourner et coulisser dans la pièce de guidage (400) au moyen de la pièce de guidage (400) qui peut être montée sur la partie filetée (350) et qui, en combinaison avec la partie filetée (350), est disposée pour convertir un mouvement de rotation de l'élément de transmission (200) en un mouvement de déplacement le long de l'axe de déplacement (X),
dans lequel le dispositif d'entraînement (150) comprend une vis de réglage (600) pour convertir un mouvement de rotation de l'élément de transmission (200), et dans lequel la vis de réglage (660) peut être fixée pour régler la distance relative des premier et deuxième éléments d'accouplement, dans lequel
le premier et/ou le deuxième élément de couplage (361, 362) est/sont formé(s) comme des vis pouvant être vissées sur l'élément de réglage (300) afin de pouvoir régler la distance du premier et du deuxième élément de couplage l'un par rapport à l'autre.

2. Dispositif selon la revendication 1, **caractérisé en ce que** l'élément d'actionnement (300) présente au moins une saillie (310) faisant saillie radialement par rapport à l'axe de déplacement (X) et l'élément de maintien (500) présente une première et une deuxième butée (510, 520) correspondant à celle-ci, la au moins une saillie (310) et la première et la deuxième butée (510, 520) étant prévues pour limiter la course de l'élément d'actionnement (300) le long de l'axe de déplacement (X).

3. Dispositif selon la revendication 1 ou 2, **caractérisé en ce que** la partie de guidage (400) est disposée de manière amovible sur l'élément de retenue (500).

4. Dispositif selon l'une quelconque des revendications 1 à 3, **caractérisé en ce que** le premier et/ou le deuxième élément d'accouplement (361, 362) est/sont formé(s) par une tête sphérique disposée concentriquement à l'axe de déplacement (X).

5. Dispositif selon l'une quelconque des revendications 1 à 4, **caractérisé en ce que** le premier et/ou le deuxième élément d'accouplement (361, 362) est/sont formé(s) comme des vis détachables de l'actionneur (300).

6. Dispositif selon l'une quelconque des revendications 1 à 5, **caractérisé en ce que** l'élément de transmission (200) comporte une denture, notamment une couronne dentée.

7. Dispositif selon la revendication 6, **caractérisé en ce qu'**une vis de réglage est prévue pour l'engagement de la denture.

8. Projecteur de véhicule automobile comprenant un boîtier, au moins deux ensembles optiquement pertinents et au moins un dispositif de réglage selon l'une des revendications 1 à 7.

9. Projecteur de véhicule automobile selon la revendication 8, **caractérisé en ce que** l'élément de guidage (400) est disposé de manière fixe par rapport au boîtier du projecteur de véhicule automobile.

10. Projecteur de véhicule automobile selon la revendication 8 ou 9, **caractérisé en ce que** l'élément de retenue (500) est relié de manière fixe au boîtier du projecteur de véhicule automobile.
